# FASCICULE DE BREVET EUROPEEN

(11) **EP 3 394 945 B1**
(45) Date de publication et mention de la délivrance du brevet: **30.12.2020**
(21) Numéro de dépôt: 16813001.1
(22) Date de dépôt: 22.11.2016
(51) Int. Cl.: H02G 15/105, H01R 9/05

(54) **DISPOSITIF COLLECTEUR DE COURANT, POUR ÉCRAN DE CÂBLE, NOTAMMENT DE CÂBLE HTA**
STROMABNEHMER VORRICHTUNG FÜR EINEN KABELSCHIRM, INSBESONDERE FÜR EIN MITTELSPANNUNGSKABEL
CURRENT COLLECTOR DEVICE FOR A CABLE SHIELD, ESPECIALLY FOR AN MV CABLE

(30) Priorité: 23.12.2015 FR 1563237
(43) Date de publication de la demande: 31.10.2018
(73) Titulaire: Nexans, 92400 Courbevoie (FR)
(72) Inventeur: CARPENTIER, Ludovic, 08200 Floing (FR)
(74) Mandataire: Ipsilon
(86) Numéro de dépôt international: PCT/FR2016/053048
(87) Numéro de publication internationale: WO 2017/109311

(56) Documents cités:
- EP-A1- 0 732 768
- US-A- 3 240 868
- US-A- 3 777 050
- US-A- 5 429 529
- US-B1- 7 044 756

## Description

### DOMAINE DE L'INVENTION

L'invention se rapporte au domaine général des câbles de transport d'énergie, de type HTA et HTB, comportant un écran de métallique entourant le ou les conducteurs constituant le câble considéré. Elle concerne plus particulièrement les moyens pour réaliser l'interconnexion des écrans de différents câbles entre eux.

### CONTEXTE DE L'INVENTION - ART ANTERIEUR

Le document US-A-5 429 529 décrit un dispositif collecteur de courant conforme au préambule de la revendication 1.

Le document US-A-3 777 050 divulgue un dispositif de mise à la masse d'un ruban de blindage pour des câbles à haute tension.

Le document US-A-3 240 868 divulgue un boîtier étanche pour des câbles épissés.

Le document EP0 732 768 A1 divulgue un procédé pour établir une liaison électrique avec un écran métallique d'un câble d'énergie et une bague pour la mise en œuvre du procédé.

Le document US-B1-7 044 756 divulgue un procédé et une structure pour mettre à la masse un câble blindé.

Quand on utilise différents câbles moyenne tension (câbles HTA et HTB) pour réaliser une ligne de transport d'énergie, les câbles étant voisins les uns des autres, on met généralement en place des liaisons électriques reliant les écrans des différents câbles de façon à améliorer le drainage (la collecte) des courants pouvant circuler dans ces écrans (courants de défaut).

Or s'agissant de câbles moyenne tension, destinés notamment à être disposés sous terre, à même le sol, les éléments conducteurs ainsi que l'écran qui les entoure sont enrobés par une gaine de protection qui assure l'étanchéité du câble ainsi qu'une protection mécanique et chimique, gaine qu'il est nécessaire d'ôter si l'on veut accéder à l'écran.

L'écran de blindage, ou écran métallique, ou écran conducteur, est généralement constitué d'une feuille métallique de faible épaisseur placée contre la paroi interne de la gaine de protection et généralement collée à cette paroi.

Par suite la création d'une liaison électrique entre les écrans de différents câbles implique que l'on intervienne sur chacun des câbles considérés, de façon à en ouvrir la gaine de protection isolante pour accéder à l'écran, puis que l'on mette en place un conducteur électrique ou conducteur collecteur, et qu'on assure son maintien en place, de telle façon que ce dernier soit en contact électrique avec l'écran de manière permanente.

Elle implique également, dans la mesure où la mise en place de ce conducteur nécessite d'ouvrir la gaine de protection du câble, de mettre en place, après du conducteur collecteur de courant, des moyens de remplacement permettant de rendre au câble son étanchéité d'origine, de façon à restituer l'isolation du câble vis-à-vis de l'extérieur.

généralement, une telle liaison électrique est réalisée au moyen d'une tresse conductrice, reliant les écrans des différents câbles considérés entre eux, tresse métallique dont l'extrémité est massivée, de façon à la rigidifier dans la zone d'extrémité en contact avec l'écran du câble et assurer l'étanchéité d'ensemble. Cette étanchéité est par ailleurs renforcée par l'utilisation de mastic d'étanchéité.

On rappelle que la massivation est une opération consistant à charger la tresse en étain.

Cependant l'usage montre que la massivation de la tresse conductrice n'assure pas, de manière totalement satisfaisante et durable, l'étanchéité d'ensemble au niveau de la zone de jonction de la tresse à l'écran du câble. Ceci est d'autant plus vrai que le câble considéré est situé en zone humide ou même qu'il est immergé.

Il y a donc nécessité à trouver une façon alternative d'établir une liaison électrique de drainage (de collecte de courant) permettant d'évacuer vers la terre les courant induit dans l'écran d'un câble liaison et permettant de relier entre eux les écrans de différents câbles situés au voisinage les uns des autres.

Un but de l'invention est de proposer une solution alternative aux solutions existantes, qui soit à la fois facile à mettre en œuvre et efficace, en en termes de qualité du contact électrique établi et d'étanchéité des liaisons établies.

A cet effet l'invention a pour objet un dispositif collecteur de courant conforme à la revendication 1.

Selon diverses dispositions pouvant être considérées séparément ou en combinaison avec d'autres dispositions, le dispositif selon l'invention peut comporter certaines caractéristiques additionnelles listées ci-après.

Selon une disposition particulière, l'élément isolant du dispositif selon l'invention présenter sur son pourtour au moins une cavité dimensionnée de façon à ce que lorsque l'élément isolant est inséré dans la seconde section tubulaire de l'élément conducteur, la cavité étant placée en regard de l'ouverture, l'extrémité du conducteur puisse venir se loger dans la cavité en passant à travers l'ouverture.

Selon une autre disposition particulière, la seconde section tubulaire de l'élément conducteur comporte, sur son bord externe, un repliement de sa paroi formant un rebord circonférentiel dirigé vers l'intérieur et disposée dans le plan perpendiculaire à l'axe de ladite section, ledit rebord limitant l'ouverture de la seconde section tubulaire. De la sorte, lorsque l'élément isolant est inséré dans l'ouverture, il est bloqué en position par ledit rebord.

Selon une forme de réalisation particulière en relation avec la disposition précédente, l'élément isolant peut comporter sur sa paroi externe une rainure circulaire configurée de telle façon que, lorsque le second élément est inséré dans la seconde section de l'élément conducteur, le rebord externe vienne se loger dans la rainure.

Selon une disposition particulière, le rebord externe de la seconde section tubulaire de l'élément conducteur présente, à l'endroit d'une ouverture, une découpe permettant à l'extrémité d'un conducteur, inséré dans ladite ouverture, de pénétrer dans la partie de la cavité de l'élément isolant située en dehors de ladite seconde section.

Selon une autre disposition particulière, l'élément isolant est un élément plein comportant en son centre une ouverture cylindrique permettant de placer ledit second élément autour du câble.

Selon une autre disposition particulière, l'ouverture de la paroi de la second section de l'élément conducteur est configurée de telle façon que le bord interne de ladite ouverture s'étendant sur la paroi de la section intermédiaire est distant de la ligne de jonction entre la première section et la section intermédiaire.

Selon une autre disposition particulière, la première section de l'élément conducteur présente une surface externe lisse ou une surface externe comportant des picots à la façon d'une râpe à fromage.

Selon une forme de réalisation particulière, l'élément isolant est réalisé en élastomère EPDM.

Selon une autre disposition particulière, la seconde section de l'élément conducteur est pourvue de plusieurs ouvertures distantes les unes des autres et réparties sur son pourtour, et l'élément isolant comporte autant de cavités que l'élément conducteur comporte d'ouvertures. Lesdites cavités sont agencées sur le pourtour de l'élément isolant de telle façon que, lorsque ce dernier est inséré dans la seconde section de l'élément conducteur, chaque cavité puisse se trouver placée en regard d'une ouverture.

L'invention a également pour objet un procédé pour la mise en place d'un conducteur collecteur de courant sur un câble comportant un écran électrique, la mise en place étant réalisée au moyen d'un collecteur de courant selon l'invention. Le procédé comporte les étapes suivantes:
- une première étape consistant à inciser la gaine protectrice externe entourant le câble,
- une deuxième étape consistant à enfiler le dispositif collecteur de courant autour du câble et à insérer la première section de l'élément conducteur du dispositif sous la gaine protectrice, de façon à établir une continuité électrique entre l'écran du câble et ladite première section;
- une troisième étape consistant à mettre en place l'extrémité du conducteur collecteur de courant dans la cavité de l'élément isolant, par insertion à l'oblique de l'extrémité dudit conducteur dans l'ouverture ménagée dans la seconde section de l'élément conducteur, et à rabattre ledit conducteur contre le corps du câble;

- une quatrième étape consistant à mettre en place un manchon conducteur autour du dispositif de façon à assurer une continuité électrique de l'écran électrique de part et d'autre du dispositif;
- une cinquième étape consistant à mettre en place une section de gaine protectrice enrobant la zone du câble où est réalisée la mise en place du conducteur collecteur de courant, ladite gaine en matériau isolant élastique présentant un diamètre défini de telle façon qu'elle assure le maintien dudit conducteur en position plaquée contre le corps du câble.

Selon une forme de mise en œuvre particulière du procédé selon l'invention, la section de gaine protectrice utilisée est en EPDM.

Selon une autre forme particulière de mise en œuvre, pour laquelle la mise en place d'un conducteur collecteur de courant sur un câble comportant un écran électrique est réalisée au niveau de la jonction entre deux segments de câbles, au moyen d'un raccord de jonction, le dispositif collecteur selon l'invention est placé sur le câble de telle façon que l'élément isolant du dispositif soit placé en butée contre le raccord de jonction.

Selon une autre forme particulière de mise en œuvre, les troisième et quatrième étapes sont réalisées en déployant successivement sur le câble la tresse métallique et la gaine de protection qui équipent le raccord de jonction.

Parmi diverses applications, le dispositif selon l'invention peut avantageusement être utilisé, comme une véritable solution "plug and play", pour raccorder entre eux les écrans métalliques de différents câbles de transport d'énergie cheminant à proximité les uns des autres, des câbles moyenne tension et haute tension (câbles HTA et HTB) notamment. On peut ainsi effectuer le raccordement des écrans de câbles massifs entre eux, sans avoir besoin d'utiliser des outillages spécifiques.

Il peut avantageusement être installé, dans le cadre de câbles de transport d'énergie de grande longueur, constitués de plusieurs sections raccordées les unes aux autres, au niveau des zones de raccordements de deux sections de câbles successives et permet dans ce cadre de réaliser de manière simple la continuité électrique entre les écrans des différentes sections reliées entre elles.

Il peut encore, avantageusement, être installé au niveau des connexions entre câbles de transport d'énergie.

Grâce à la présence de l'élément isolant, qui crée une butée élastique les dilatations d'un câble pouvant apparaitre, en fonctionnement, au niveau du raccordement d'un conducteur de drainage, peuvent être avantageusement absorbées de sorte que la continuité électrique et l'étanchéité du câble peuvent être préservées.

De manière également avantageuse, la mise en place d'un dispositif de raccordement selon l'invention n'implique pas que le raccordement d'un conducteur de drainage soit réalisé au moment de la mise en place du dispositif sur le câble. Ainsi le raccordement des écrans de différents câbles peut être réalisé à tout moment après la mise en place de dispositifs de raccordement selon l'invention sur les câbles considérés.

Les caractéristiques et avantages de l'invention seront mieux appréciés grâce à la description qui suit, description qui s'appuie sur les figures annexées qui présentent:
- la figure1, un schéma général illustrant le principe du raccordement électrique réalisé au moyen de l'invention;
- la figure 2, une illustration schématique présentant les différents éléments du dispositif selon l'invention;
- la figure 3, une vue partielle agrandie de la zone d'insertion d'un conducteur collecteur de courant dans le dispositif selon l'invention;
- la figure 4, une vue en coupe de la zone d'insertion d'un conducteur dans le dispositif selon l'invention, la coupe étant réalisé dans le plan défini par l'axe de symétrie du dispositif et une droite A-A;
   la figure 5, une vue partielle en coupe du dispositif selon l'invention, la coupe étant réalisé dans le plan défini par l'axe de symétrie du dispositif et une droite B-B;
- les figures 6 et 7, des vue générales partielles du dispositif selon l'invention présentant respectivement une zone d'insertion seule et une zone d'insertion dans laquelle un conducteur collecteur de courant est inséré;
- les figures 8 à 11, des illustrations d'un exemple de mise en œuvre du dispositif selon l'invention au niveau de la jonction de deux segments d'un câble.

### DESCRIPTION DETAILLEE

La suite de la description présente l'invention à travers d'une forme de réalisation particulière prise comme exemple. Cet exemple est bien entendu non limitatif de la portée ou de l'étendue de l'invention telle qu'elle est déterminée par les revendications. En particulier, des dispositifs collecteurs de courant présentant les caractéristiques techniques de l'invention et destinés à réaliser une connexion électrique entre les écrans conducteurs de deux ou plusieurs câbles et entre ces écrans et la terre, ou encore une connexion électrique entre les écrans de deux sections de câbles successives, quel que soit le type de câble considéré comportant un écran métallique périphérique (écran conducteur), entrent bien entendu dans le champ couvert par la présente invention.

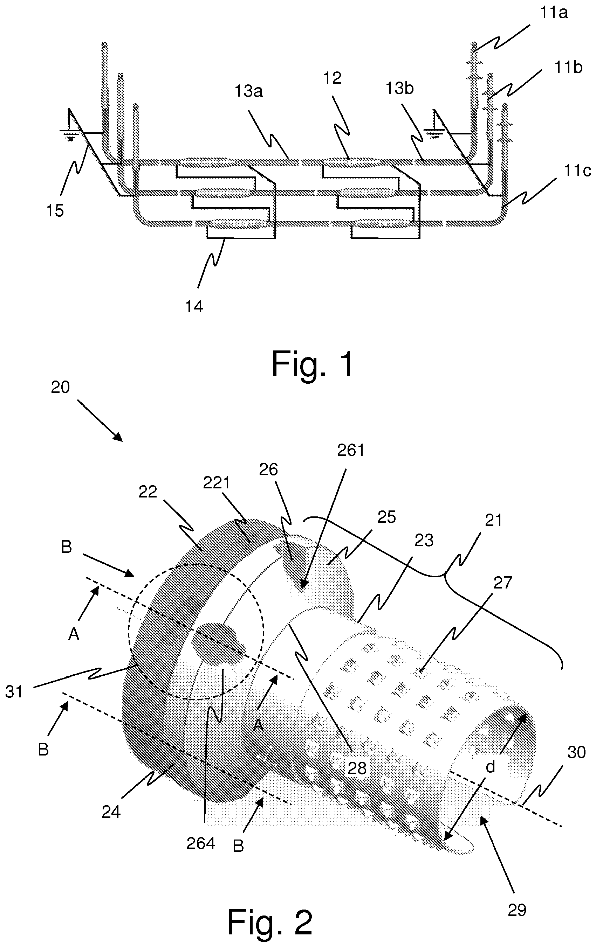

L'illustration de la figure 1 présente un système de raccordement des écrans de différents câbles de transport d'énergie 11a, 11b, 11c, etc..., situés au voisinage les uns des autres, qui se déploie principalement depuis les jonctions 12 reliant entre elles des sections de câble 13 constituant un câble.

Un tel maillage, constitué de conducteur 14 reliant entre eux les écrans métalliques de différents câbles et de conducteurs 15 reliant tous ces écrans à la terre, permet d'assurer une certaine redondance qui permet un drainage électrique des courant circulant au travers des différents écrans même si une rupture de continuité électrique apparait au niveau d'un câble. Un tel maillage peu avantageusement être facilement mis en place au moyen du dispositif selon l'invention.

La figure 2 présente quant à elle une vue générale du dispositif collecteur de courant 20 selon l'invention, dans une forme de réalisation préférée mais non exclusive.

Dans cette forme de réalisation le dispositif selon l'invention apparait particulièrement bien adapté pour assurer la connexion d'un conducteur collecteur de courant 14 à l'écran du câble considéré au niveau d'une jonction entre deux sections de câble 13.

Le dispositif 20 selon l'invention comporte principalement deux éléments, un premier élément conducteur 21 et un second élément isolant 22.

L'élément conducteur 21 comporte lui-même une première section 23 de forme générale tubulaire, sensiblement cylindrique, et une seconde section tubulaire 24, de forme cylindrique également, d'un diamètre plus grand que le diamètre de la première section 23 mais de plus faible longueur. Les deux sections 23 et 24 sont reliées l'une à l'autre par l'intermédiaire d'une section intermédiaire tronconique 25. De manière préférentielle les trois sections de l'élément conducteur 21 forment une seule et même pièce réalisé dans un matériau conducteur présentant une certaine rigidité, notamment pour qu'après sa mise en place du dispositif 20 selon l'invention sur le câble, la première section 23 de l'élément conducteur 21 reste bien en contact avec l'écran du câble contre lequel elle est placée.

L'élément conducteur 21 est par exemple réalisé en alliage de cuivre ou d'aluminium.

Lors de la mise en place du dispositif 20 sur le câble considéré, la première section 23 de l'élément conducteur 21 est destinée à venir se loger sous la gaine protectrice du câble, et plus exactement entre la paroi interne de l'écran et les couches internes du câble, la couche semi-conductrice externe par exemple.

Par suite, elle présente un diamètre intérieur d correspondant au diamètre présenté par le câble lorsque la gaine protectrice externe et l'écran sont retirés.

De la sorte, lors du montage du dispositif selon l'invention sur un câble, la première section 23 de l'élément conducteur 21 du dispositif est insérée sous la gaine de protection du câble et entre en contact avec l'écran par sa surface externe. La seconde section 24 de l'élément conducteur 21 reste, quant à elle, découverte.

Selon le mode de réalisation considéré, et la texture de l'écran du câble considéré, la première section 23 de l'élément conducteur 21 présente une paroi externe qui peut être soit lisse, exempte de toute aspérité, soit, comme illustré par la figure 2, flanquée d'aspérités, sur tout ou partie de sa surface. Ces aspérités sont par exemple formées d'encoches 27, obtenues par exemple par un poinçonnage de la paroi de première section 23, qui donnent à la paroi l'aspect d'une râpe à fromage.

L'élément Isolant 22, quant à lui, se présente comme un objet ayant la forme d'un cylindre de faible longueur, présentant un diamètre externe qui correspond sensiblement au diamètre intérieur de la seconde section 24 de l'élément conducteur 21.

De la sorte l'élément isolant 22 peut venir s'insérer, au moins sur une partie de sa longueur, dans le réceptacle que constitue la seconde section 24 de l'élément conducteur 21.

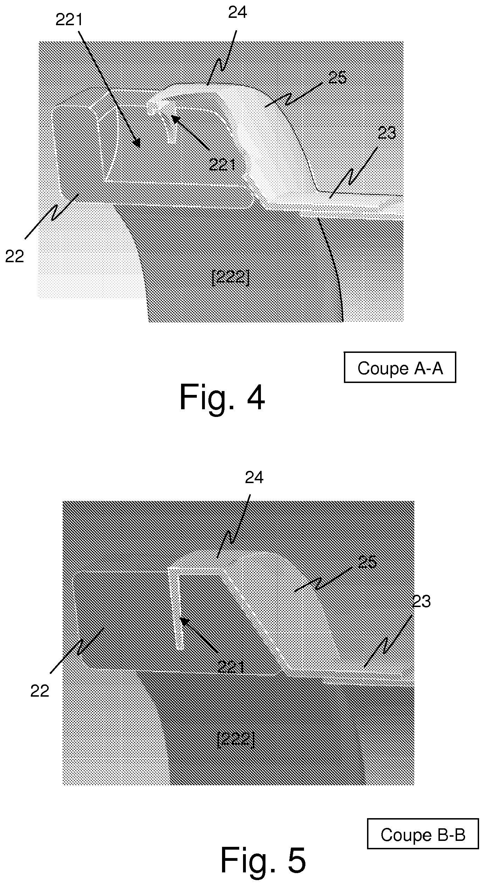

L'élément isolant présente en outre une ouverture axiale centrale 222, visible sur la figure 4, dont le diamètre correspond sensiblement au diamètre d de la première section 23 de l'élément conducteur 21. De la sorte l'élément isolant 22 peut être positionné autour du câble.

Selon l'invention, l'élément isolant 22 est réalisé dans un matériau plastique présentant une certaine élasticité, de préférence un élastomère de type EPDM.

Selon l'invention, l'élément conducteur 21 et l'élément isolant 22 peuvent présenter une surface externe fermée. Cependant, dans une forme de réalisation préférée, illustrée par la figure 2, l'élément conducteur et l'élément isolant présente une ouverture longitudinal 29 dont la largeur est déterminée de façon à permettre la mise en place du dispositif 20 sur le câble simplement en engageant le câble dans l'ouverture 29 du dispositif et en écartant l'ouverture en jouant sur l'élasticité de la structure du dispositif jusqu'à ce que le câble soit inséré dans le dispositif.

L'ouverture longitudinale 29 reprend alors sa largeur nominale de sorte que la section 23 de l'élément conducteur 21 se trouve maintenu naturellement en place, plaquée sur la surface du câble.

Selon l'invention, la seconde section 24 de l'élément conducteur 21 comporte une ou plusieurs ouvertures 26, destinées à permettre à l'extrémité d'un conducteur collecteur 15 de s'insérer dans le dispositif. A cet effet une ouverture 26 présente des dimensions définies en fonction du diamètre du conducteur collecteur 15 considéré, au niveau de son extrémité.

Comme l'illustrent les figures 2 à 4, l'ouverture 26 s'étend à la fois sur la seconde section 24 de l'élément conducteur 21, mais s'étend également sur la section intermédiaire 25.

Elle est configurée de façon à faciliter une introduction en biais de l'extrémité d'un conducteur collecteur 15.

Elle est en outre agencée préférentiellement de telle façon que, dans sa partie s'étendant sur la section intermédiaire 25, son bord interne 261 soit situé à une certaine distance de la limite 28 entre la première section 23 et la section intermédiaire 25 de l'élément conducteur 21.

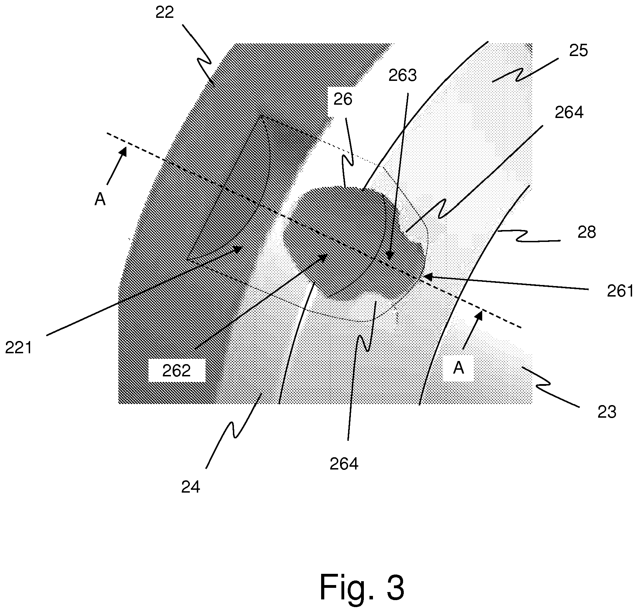

Selon l'invention, l'ouverture 26 présente deux zones distinctes, visibles sur la figure 3, une première zone 262 dimensionnée pour permettre une insertion facile, de biais, de l'extrémité d'un conducteur collecteur 15 dans l'ouverture et une seconde zone 263, resserrée, localisée dans la partie de l'ouverture 26 la plus proche de la limite 28 et formant une échancrure dans laquelle vient se coincer le conducteur 15 lorsqu'il est rabattu contre le câble sur lequel il est monté.

Dans une forme de réalisation préférée, les bords opposés de l'ouverture 26 dans la zone resserrée 263 présentent des portions acérées 264 qui viennent entailler la surface du conducteur collecteur 15 lorsque celui-ci vient se coincer dans cette zone; ces portions acérées pouvant s'étendre sur tout la longueur du bord de l'ouverture correspondant à la zone 263.

Les entailles pratiquées à la surface du conducteur collecteur 15 permettent avantageusement d'assurer la qualité du contact électrique qui s'établit entre le conducteur collecteur 15 et l'élément conducteur 21 du dispositif 20 selon l'invention, lorsque le premier est mis en place dans le second et ce, quel que soit l'état de surface du conducteur 15 et malgré la présence éventuelle d'une couche d'oxydation à la surface du conducteur.

Selon l'invention, l'élément isolant 22 comporte en outre, à sa surface, au moins au niveau de la portion de cet élément engagé dans la seconde section 24 de l'élément conducteur, une ou plusieurs cavités 221 réparties sur son pourtour de telle façon que, lorsque l'élément isolant 22 est emboité dans la seconde section 24 de l'élément conducteur 21, une cavité 221 puisse être placée en regard de chaque ouverture 26 ménagée dans l'élément conducteur 21.

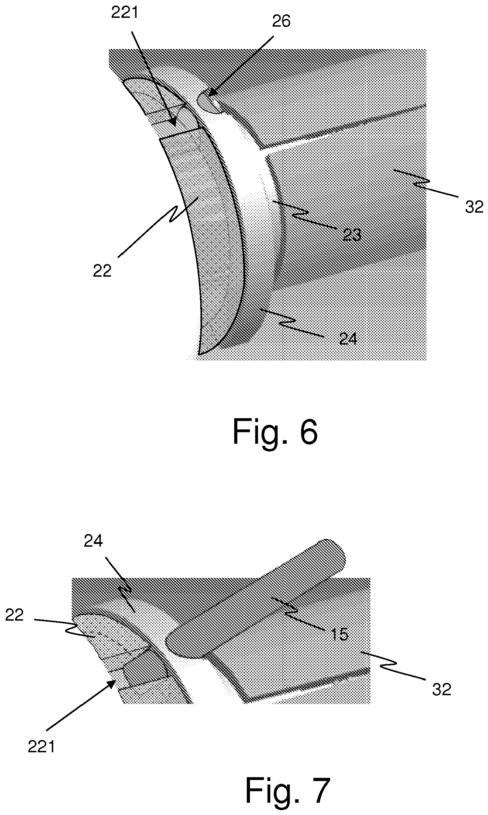

De la sorte, comme illustré plus particulièrement par les figures 6 et 7, chacune des ouvertures 26 débouche sur une cavité 221 dans laquelle l'extrémité d'un conducteur collecteur 15 peut venir se loger.

Selon la forme de réalisation considérée, les cavités 221 ménagées à la surface de l'élément isolant 22 peuvent être utilisées comme de simples logements destinés à accueillir l'extrémité d'un conducteur collecteur 15.

Alternativement, elles peuvent également être utilisées comme réservoirs de graisse de sorte que, lorsqu'un conducteur collecteur 15 est inséré dans une ouverture 26 placée en regard d'une cavité 221 remplie de graisse, l'insertion de l'extrémité du conducteur 15 fait refluer la graisse vers l'extérieur de la cavité. Cette dernière vient alors enrober l'extrémité du câble 15 constituant ainsi une couche de protection contre la corrosion, notamment au niveau des zones de la surface du conducteur ayant subi une incision par les arêtes coupantes 264 du bord de l'ouverture 26 lors de son insertion dans la zone 263 de l'ouverture.

D'un point de vue fonctionnel, les ouvertures 26 pratiquées dans la paroi de l'élément conducteur 21, au niveau de la seconde section tubulaire 24 et de la section intermédiaire 25, sont positionnées vis-à-vis de la première section cylindrique 23 de telle façon que lorsque l'on insère un conducteur 15 dans une ouverture 26, insertion réalisée à l'oblique comme illustré par la figure 6, et que l'on rabat ledit conducteur 15 contre le câble sur lequel il est monté, autrement dit contre la première section 23 de l'élément conducteur 21, l'extrémité du conducteur 15 entre en appui sur la paroi interne de la seconde section 24 et de sorte que le conducteur pénètre en force dans la zone resserrée 263 de l'ouverture 26 et s'y coince.

Comme mentionné précédemment, l'insertion du conducteur 15 dans l'échancrure 263 s'accompagne alors d'une incision de la surface du conducteur au contact avec les portions acérées 264 du bord de l'échancrure 263.

Selon un mode de réalisation préférentiel, afin d'éviter que la force de torsion appliquée au conducteur 15 pour le rabattre contre le corps du câble sur lequel il est monté n'induise une déformation de la paroi de la seconde section 24 au niveau de la zone de contact de l'extrémité du conducteur 15 avec cette dernière, la paroi de la seconde section tubulaire 24 peut être renforcée.

Selon la forme de réalisation considérée, ce renfort peut consister en un accroissement local de l'épaisseur de matériau formant l'élément conducteur 21 au niveau la seconde section 24.

Alternativement ce renfort peut consister, comme dans l'exemple illustré par les vues en coupe des figures 4 et 5, en un repliement vers l'intérieur du bord externe de la paroi de la section 24, de façon à former un anneau 241, disposé perpendiculairement à l'axe de la section 24, limitant son ouverture et agissant comme un raidisseur destiné à empêcher la déformation de la paroi de cette dernière. On note ici que la figure 4 présente une vue partielle en coupe du dispositif selon l'invention selon un plan passant par l'axe AA de la figure 2 et l'axe de symétrie 30 du dispositif; alors que la figure 5 présente une vue partielle en coupe du dispositif selon l'invention selon un plan passant par l'axe BB de la figure 2 et l'axe de symétrie 30 du dispositif.

Dans cette dernière configuration, pour des raisons de facilité d'assemblage, la paroi externe de l'élément isolant 22 comporte une fente circulaire périphérique dans laquelle vient s'insérer le repli en forme de bague 241, comme illustré sur les figures 4 et 5. Une fois inséré dans la section 24, l'élément isolant 22 est alors maintenu en place dans l'élément conducteur 21 par la présence de la bague 241 qui pénètre dans sa paroi.

Il est à noter que, de façon à permettre à l'extrémité du conducteur 15 de pénétrer complètement à l'intérieur de la cavité 221 ménagée dans l'élément isolant 22 en traversant l'ouverture 26, le rebord externe 241 en forme d'anneau de la seconde section tubulaire 24 de l'élément conducteur 21 présente préférentiellement, à l'endroit d'une ouverture 26, une découpe permettant à l'extrémité d'un conducteur 15 insérée dans ladite ouverture, de de pénétrer dans la partie de la cavité 221 de l'élément isolant 22 située en dehors de ladite seconde section 24.

La figure 4, ainsi que les figures 6 et 7 présentent une telle découpe. Comme on peut ainsi le constater sur l'illustration de la figure 7, l'extrémité du conducteur 15, une fois insérée dans l'ouverture 26, vient se loger dans la cavité 221 de l'élément isolant 22 en traversant la paroi du rebord 241 et prend appui sur le bord de la découpe.

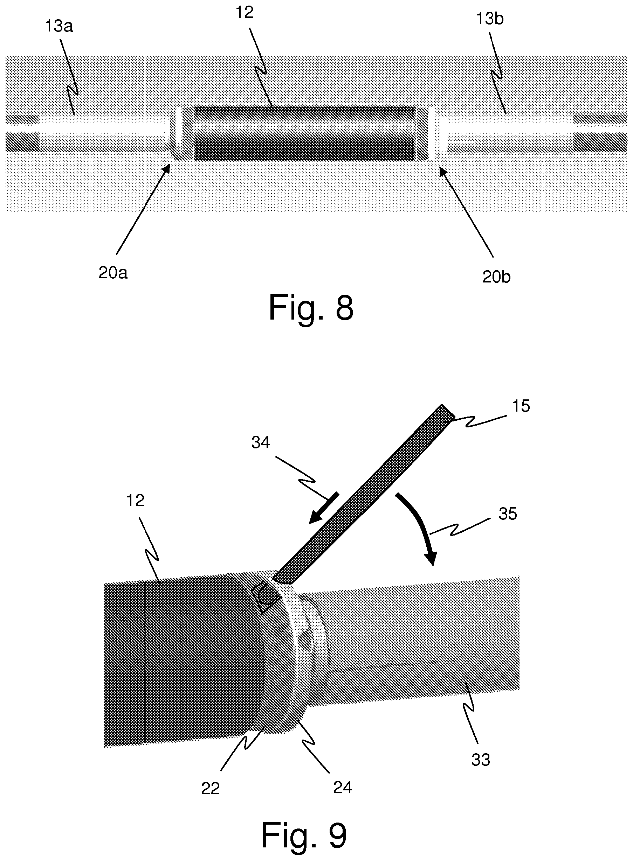

La suite de la description présente l'invention à travers d'un exemple particulier d'utilisation, illustré par les figure 8 à 11, exemple qui correspondant à la mise en place d'un conducteur collecteur de courant 15 sur un câble de transport d'énergie électrique de type HTA ou HTB, au niveau de la zone de connexion entre deux segments successifs 13a et 13b du câble.

La figure 8 montre la jonction de deux segments 13a et 13b d'un câble de transport d'énergie, un câble HTA par exemple, au moyen d'un raccord de jonction 12, élément dont le rôle consiste à établir la connexion électrique des âmes des deux segments de câble,13a et 13b, tout en assurant les fonctions remplies par les différentes gaines et couches de matériaux entourant normalement l'âme d'un câble de ce type.

A cet effet le raccord de connexion 12 présente généralement à sa surface un manchon conducteur destiné à servir d'écran recouvert d'une gaine en matériau polymère ces éléments n'étant pas, pour des raisons de clarté, représentés sur la figure 8.

Sur le câble ainsi réalisé sont placés de part et d'autre du raccord de connexion 12, deux dispositifs de raccordement 20a et 20b selon l'invention; les dispositifs 20a et 20b étant mis en place de telle façon que l'élément isolant 22 de chacun des dispositifs soit placé au contact d'une extrémité du raccord 12.

Comme décrit précédemment, la première section 21 de l'élément conducteur de chacun des dispositifs est placée sous la gaine de protection 33 du câble au contact de l'écran, de sorte que le dispositif se trouve coincé à l'extrémité du segment de câble 13a ou 13b sur lequel il est monté, entre l'extrémité de la gaine de protection 33 et l'extrémité du raccord de connexion 12.

Une fois les dispositifs 20 a et 20b mis en place on réalise le raccordement d'un conducteur collecteur 15 à chaque section de câble comme illustré par la figure 9. Pour ce faire on insère à l'oblique (flèche 34) le conducteur 15 considéré dans une des ouvertures 26 disponibles sur le dispositif de raccordement considéré, 20a ou 20b. Puis on rabat le conducteur 15 (flèche 35) en direction de la première section 23 de l'élément conducteur 21 du dispositif, de façon à amener le corps du conducteur 15 contre la paroi du segment de câble, 13a ou 13b, sur lequel il est monté.

Comme décrit précédemment, le rabattement du conducteur 15 contre la section 23 de l'élément conducteur 21 du dispositif 20 occasionne son insertion et son blocage dans la partie 263 de l'ouverture, cette insertion s'accompagnant de manière automatique de l'incision de la surface du conducteur 15.

Le conducteur collecteur 15 se trouve ainsi, au niveau de sa portion terminale, plaqué, contre la gaine de protection 33 de la section de câble 13 à laquelle il est à présent raccordé.

A ce stade le contact électrique entre l'écran entourant la section de câble 13 considérée et le conducteur collecteur 15 est définitivement établi par l'intermédiaire du dispositif de raccordement 20.

Une fois le raccordement effectué, l'opération suivante consiste simplement d'une part à établir la continuité électrique des écrans des deux segments de câble 13a et 13b, et d'autre part à restaurer la protection mécanique et l'étanchéité du câble au niveau de la jonction.

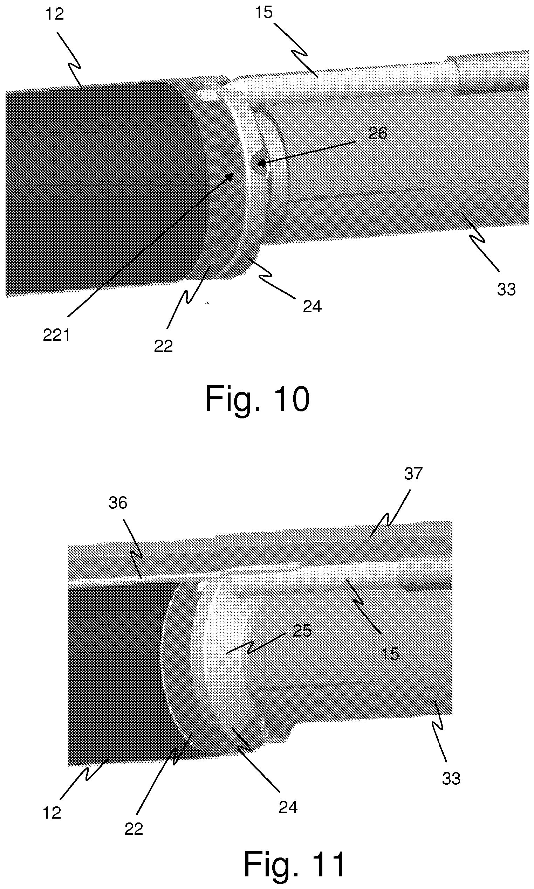

Comme l'illustre la figure 11, la mise en continuité électrique des écrans peut être ici avantageusement réalisée de manière simple en plaçant autour du raccord de connexion 12 un manchon conducteur 36 dont les extrémités s'étendent au-delà dudit raccord, sur une longueur suffisante pour assurer la mise en contact de ce manchon 36 avec la seconde section 24 de l'élément conducteur 21 de chaque dispositif 20, cette seconde section étant elle-même en contact avec l'écran du segment de câble 13a ou 13b sur lequel le dispositif 20 considéré est placée. L'assemblage est alors achevé par la mise en place d'un élément de gaine de protection isolante 37, de préférence en matériau élastique, dont le diamètre est choisi de telle façon qu'il épouse le plus possible les contours des différents éléments qu'elle recouvre et maintienne notamment le conducteur 15 plaqué conte la section de câble 13.

Il est à noter que suivant le type de raccord de connexion choisi, le manchon conducteur 36 et l'élément de gaine de protection 37 peuvent être des éléments séparés ou bien des éléments faisant partie du raccord de connexion 12.

Dans ce second cas ces éléments sont repliés sur le corps du raccord de connexion 12 pendant la phase de mise en place du conducteur 15 dans le dispositif 20 et de rabattement du conducteur 15 sur la section de câble 13, de façon à ce qu'ils ne déborde pas des extrémités du raccord. Puis une fois la connexion électrique établie le manchon conducteur 36 puis la gaine de protection 37 sont étendus de part et d'autre du raccord pour recouvrir les extrémités des deux sections de câble 13a et 13b, le manchon conducteur 36 étant dimensionné pour simplement recouvrir la seconde portion 24 de l'élément conducteur 21 du dispositif 20.

## Revendications

1. Dispositif collecteur de courant pour câble du type comportant un écran électrique entourant un conducteur central ledit écran électrique étant disposé sous la gaine de protection extérieure dudit câble, ledit dispositif comportant un élément conducteur (21), comportant lui-même une première section tubulaire (23) de forme sensiblement cylindrique formant un manchon conducteur configuré pour être inséré sur le câble au contact de l'écran et une seconde section tubulaire (24) sensiblement cylindrique, d'un diamètre supérieur au diamètre de la première section, les deux sections étant liées l'une à l'autre par une section intermédiaire tubulaire tronconique (25); ainsi qu'un élément isolant (22), de forme cylindrique, en matériau isolant et élastique, configuré pour venir s'insérer au moins partiellement dans la seconde section tubulaire (24) de l'élément conducteur (22), **caractérisé en ce que** la paroi de la seconde section tubulaire (24) comportant au moins une ouverture (26) s'étendant sur la paroi de la section intermédiaire (25), ladite ouverture (26) étant configurée de façon à permettre l'insertion d'un conducteur (15) de diamètre donné au travers de la paroi de l'élément conducteur (21) et à assurer, après insertion, son maintien en place dans l'ouverture (26) et sa connexion électrique permanente avec le premier élément (21), **en ce que** l'ouverture (26) est configurée de façon à permettre l'insertion du conducteur (15) à l'oblique par rapport au corps de la première section (23) de l'élément conducteur (21) et à présenter, sur sa partie s'étendant sur la paroi de la section intermédiaire, une zone rétrécie (263) configurée pour permettre que dans ladite zone rétrécie (263) le conducteur (15) vienne s'insérer lorsque, après insertion dans l'ouverture (26), il est rabattu contre la première section (23) de l'élément conducteur (21) et **en ce que** les bords de l'ouverture (26) sont façonnés, au moins au niveau de la zone rétrécie (263), de façon à présenter une arête tranchante (264) qui est configurée pour inciser la surface du conducteur (15) lorsque celui-ci est rabattu contre la première section (23) de l'élément conducteur (21).

2. Dispositif selon la revendication 1, **caractérisé en ce que** l'élément isolant (22) présente sur son pourtour au moins une cavité (221) dimensionnée de façon à ce que lorsque l'élément isolant (22) est inséré dans la seconde section tubulaire (24) de l'élément conducteur (21), la cavité (221) étant placée en regard de l'ouverture (26); l'extrémité du conducteur (15) puisse venir se loger dans la cavité (221) en passant à travers l'ouverture (26).

3. Dispositif selon la revendication 1 ou 2, **caractérisé en ce que** la seconde section tubulaire (24) de l'élément conducteur (21) comporte sur son bord externe un repliement de sa paroi formant un rebord circonférentiel (241) dirigé vers l'intérieur et disposée dans le plan perpendiculaire à l'axe de ladite section, ledit rebord (241) limitant l'ouverture de la seconde section tubulaire (24) de sorte que lorsque l'élément isolant (22) y est inséré, il est bloqué en position par ledit rebord (241).

4. Dispositif selon la revendication 3, **caractérisé en ce que** l'élément isolant (22) comporte sur sa paroi externe une rainure circulaire configurée de telle façon que, lorsque le second élément (22) est inséré dans la seconde section (24) de l'élément conducteur (21), le rebord externe (241) vienne se loger dans la rainure.

5. Dispositif selon l'une quelconque des revendications 3 ou 4, **caractérisé en ce que** le rebord externe (241) de la seconde section tubulaire (24) de l'élément conducteur (21) présente à l'endroit d'une ouverture (26) une découpe permettant à l'extrémité d'un conducteur (15) inséré dans ladite ouverture (26) de pénétrer dans la partie de la cavité (221) de l'élément isolant (22) située en dehors de ladite seconde section (24).

6. Dispositif selon l'une des revendications 1 à 5, **caractérisé en ce que** l'élément isolant (22) est un élément plein comportant en son centre une ouverture cylindrique permettant de placer ledit second élément autour du câble.

7. Dispositif selon l'une quelconque des revendications précédentes, **caractérisé en ce que** l'ouverture de la paroi de la second section (24) de l'élément conducteur (21) est configurée de telle façon que le bord interne (261) de ladite ouverture (26) s'étendant sur la paroi de la section intermédiaire (25) est distant de la ligne de jonction (28) entre la première section (23) et la section intermédiaire (25).

8. Dispositif selon l'une quelconque des revendications précédentes, **caractérisé en ce que** la première section (23) de l'élément conducteur (21) présente une surface externe lisse ou une surface externe comportant des picots (27) à la façon d'une râpe à fromage.

9. Dispositif selon l'une quelconque des revendications précédentes **caractérisé en ce que** l'élément isolant (22) est réalisé en élastomère EPDM.

10. Dispositif selon l'une quelconque des revendications précédentes **caractérisé en ce que** la seconde section (24) de l'élément conducteur (21) étant pourvu de plusieurs ouvertures (26) distantes les unes des autres et réparties sur son pourtour, l'élément isolant (22) comporte autant de cavités (221) que l'élément conducteur (21) comporte d'ouvertures (26), lesdites cavités (221) étant agencées sur le pourtour de l'élément isolant (22) de telle façon que, lorsque ce dernier est inséré dans la seconde section (24) de l'élément conducteur (21), chaque cavité (221) puisse se trouver placée en regard d'une ouverture (26).

11. Procédé pour la mise en place d'un conducteur collecteur de courant sur un câble comportant un écran électrique, **caractérisé en ce que**, la mise en place étant réalisée au moyen d'un collecteur de courant (20) selon l'une quelconque des revendications 1 à 7, il comporte les étapes suivantes:
- une première étape consistant à inciser la gaine protectrice externe (33) entourant le câble,
- une deuxième étape consistant à enfiler le dispositif collecteur de courant (20) autour du câble et à insérer la première section (23) de l'élément conducteur (21) du dispositif sous la gaine protectrice (33), de façon à établir une continuité électrique entre l'écran du câble et ladite première section (23);
- une troisième étape consistant à mettre en place l'extrémité du conducteur collecteur de courant (15) dans la cavité (221) de l'élément isolant (22), par insertion à l'oblique de l'extrémité dudit conducteur (15) dans l'ouverture (26) ménagée dans la seconde section (24) de l'élément conducteur (21), et à rabattre ledit conducteur (15) contre le corps du câble;
- une quatrième étape consistant à mettre en place un manchon conducteur (34) autour du dispositif de façon à assurer une continuité électrique de l'écran électrique de part et d'autre du dispositif;
- une cinquième étape consistant à mettre en place une section de gaine protectrice (35) enrobant la zone du câble où est réalisée la mise en place du conducteur collecteur de courant (15), ladite gaine en matériau isolant élastique présentant un diamètre défini de telle façon qu'elle assure le maintien dudit conducteur (15) en position plaquée contre le corps du câble.

12. Procédé selon la revendication 11, **caractérisé en ce que** la section de gaine protectrice (35) utilisée est en EPDM.

13. Procédé selon l'une des revendications 11 ou 12, **caractérisé en ce que** la mise en place d'un conducteur collecteur de courant (15) sur un câble comportant un écran électrique étant réalisée au niveau de la jonction entre deux segments (13a, 13b) de câbles au moyen d'un raccord de jonction (12), le dispositif collecteur (20) est placé sur le câble de telle façon que l'élément isolant (22) du dispositif soit placé en butée contre le raccord de jonction (12).

14. Procédé selon la revendication 13, **caractérisé en ce que** la mise en œuvre des troisième et quatrième étapes sont réalisées en déployant successivement sur le câble la tresse métallique et la gaine de protection qui équipent le raccord de jonction (12).

## Patentansprüche

1. Stromabnehmervorrichtung für ein Kabel des Typs, aufweisend eine elektrische Abschirmung, die einen zentralen Leiter umgibt, wobei die elektrische Abschirmung unter der äußeren Schutzhülle des Kabels angeordnet ist, wobei die Vorrichtung ein Leiterelement (21) aufweist, das selbst einen ersten, etwa zylindrisch geformten rohrförmigen Abschnitt (23) aufweist, der eine leitende Hülse bildet, die ausgelegt ist, um auf dem Kabel im Kontakt mit der Abschirmung eingesetzt zu sein, und einen zweiten, etwa zylindrischen rohrförmigen Abschnitt (24) mit einem Durchmesser, der größer als der Durchmesser des ersten Abschnitts ist, wobei die zwei Abschnitte anhand eines kegelstumpfförmigen rohrförmigen Verbindungsabschnitts (25) miteinander verbunden sind; sowie ein zylindrisch geformtes Isolierelement (22) aus elastischem Isolationsmaterial, das ausgelegt ist, um sich mindestens teilweise in den zweiten rohrförmigen Abschnitt (24) des Leiterelements (22) einzusetzen, **dadurch gekennzeichnet, dass** die Wand des zweiten rohrförmigen Abschnitts (24) mindestens eine Öffnung (26) aufweist, die sich über die Wand des Verbindungsabschnitts (25) erstreckt, wobei die Öffnung (26) derart ausgelegt ist, dass das Einsetzen eines Leiters (15) mit einem bestimmten Durchmesser durch die Wand des Leiterelements (21) gestattet ist und um nach dem Einsetzen seinen Halt vor Ort in der Öffnung (26) zu sichern und seine ständige elektrische Verbindung mit dem ersten Element (21), dass die Öffnung (26) derart ausgelegt ist, dass das Einsetzen des Leiters (15) schräg in Bezug auf den Körper des ersten Abschnitts (23) des Leiterelements (21) gestattet ist und um auf seinem Teil, der sich über die Wand des Verbindungsabschnitts erstreckt, eine verengte Zone (263) aufzuweisen, die ausgelegt ist, um zu erlauben, dass sich der Leiter (15) in die verengte Zone (263) einsetzt, wenn er nach dem Einsetzen in die Öffnung (26) gegen den ersten Abschnitt (23) des Leiterelements (21) heruntergeklappt wird und dass die Ränder der Öffnung (26) mindestens im Bereich der verengten Zone (263) derart gestaltet sind, dass sie eine Schneidkante (264) aufweisen, die ausgelegt ist, um die Oberfläche des Leiters (15) einzuschneiden, wenn dieser gegen den ersten Abschnitt (23) des Leiterelements (21) heruntergeklappt ist.

2. Vorrichtung nach Anspruch 1, **dadurch gekennzeichnet, dass** das Isolierelement (22) auf seinem Umfang mindestens einen Hohlraum (221) aufweist, der derart bemessen ist, dass, wenn das Isolierelement (22) in den zweiten rohrförmigen Abschnitt (24) des Leiterelements (21) eingesetzt ist, wobei der Hohlraum (221) der Öffnung (26) zugewandt platziert ist; das Ende des Leiters (15) im Hohlraum (221) unterkommen kann, indem es durch die Öffnung (26) verläuft.

3. Vorrichtung nach Anspruch 1 oder 2, **dadurch gekennzeichnet, dass** der zweite rohrförmige Abschnitt (24) des Leiterelements (21) auf seinem äußeren Rand eine Faltung seiner Wand aufweist, die eine nach innen gerichtete Umfangskante (241) bildet und in zur Achse des Abschnitts senkrechter Ebene angeordnet ist, wobei die Kante (241) die Öffnung des zweiten rohrförmigen Abschnitts (24) derart begrenzt, dass, wenn das Isolierelement (22) dort eingesetzt ist, es von der Kante (241) in Position blockiert ist.

4. Vorrichtung nach Anspruch 3, **dadurch gekennzeichnet, dass** das Isolierelement (22) auf seiner Außenwand eine kreisförmige Rille aufweist, die derart ausgelegt ist, dass, wenn das zweite Element (22) in den zweiten Abschnitt (24) des Leiterelements (21) eingesetzt ist, die äußere Kante (241) in der Rille unterkommt.

5. Vorrichtung nach einem der Ansprüche 3 oder 4, **dadurch gekennzeichnet, dass** die äußere Kante (241) des zweiten rohrförmigen Abschnitts (24) des Leiterelements (21) an der Stelle einer Öffnung (26) einen Ausschnitt aufweist, der es dem Ende eines in die Öffnung (26) eingesetzten Leiters (15) erlaubt, in den Teil des Hohlraums (221) des Isolierelements (22) einzudringen, der sich außerhalb des zweiten Abschnitts (24) befindet.

6. Vorrichtung nach einem der Ansprüche 1 bis 5, **dadurch gekennzeichnet, dass** das Isolierelement (22) ein volles Element ist, das in seinem Zentrum eine zylindrische Öffnung aufweist, die erlaubt, das zweite Element um das Kabel zu platzieren.

7. Vorrichtung nach einem der vorangehenden Ansprüche, **dadurch gekennzeichnet, dass** die Öffnung in der Wand des zweiten Abschnitts (24) des Leiterelements (21) derart ausgelegt ist, dass der innere Rand (261) der Öffnung (26), der sich über der Wand des Verbindungsabschnitts (25) erstreckt, von der Verbindungslinie (28) zwischen dem ersten Abschnitts (23) und dem Verbindungsabschnitt (25) entfernt ist.

8. Vorrichtung nach einem der vorangehenden Ansprüche, **dadurch gekennzeichnet, dass** der erste Abschnitt (23) des Leiterelements (21) eine glatte äußere Oberfläche oder eine äußere Oberfläche aufweist, die Spitzen (27) in der Art einer Käsereibe aufweist.

9. Vorrichtung nach einem der vorangehenden Ansprüche, **dadurch gekennzeichnet, dass** das Isolierelement (22) aus EPDM-Elastomer hergestellt ist.

10. Vorrichtung nach einem der vorangehenden Ansprüche, **dadurch gekennzeichnet, dass**, wobei der zweite Abschnitt (24) des Leiterelements (21) mit mehreren voneinander beabstandeten und auf seinem Umfang verteilten Öffnungen (26) versehen ist, das Isolierelement (22) ebenso viele Hohlräume (221) aufweist wie das Leiterelement (21) Öffnungen (26) aufweist, wobei die Hohlräume (221) auf dem Umfang des Isolierelements (22) derart eingerichtet sind, dass, wenn dieses in den zweiten Abschnitt (24) des Leiterelements (21) eingesetzt ist, sich jeder Hohlraum (221) einer Öffnung (26) zugewandt platziert befinden kann.

11. Verfahren für die Platzierung eines Stromabnehmerleiters auf einem Kabel, aufweisend eine elektrische Abschirmung, **dadurch gekennzeichnet, dass**, wobei die Platzierung mittels eines Stromabnehmers (20) nach einem der Ansprüche 1 bis 7 durchgeführt wird, es die folgenden Schritte aufweist:
- einen ersten Schritt, der darin besteht, die äußere Schutzhülle (33) einzuschneiden, die das Kabel umgibt,
- einen zweiten Schritt, der darin besteht, die Stromabnehmervorrichtung (20) um das Kabel zu ziehen und den ersten Abschnitt (23) des Leiterelements (21) der Vorrichtung unter die Schutzhülle (33) derart einzusetzen, dass eine elektrische Kontinuität zwischen der Abschirmung des Kabels und dem ersten Abschnitt (23) hergestellt wird;
- einen dritten Schritt, der darin besteht, das Ende des Stromabnehmerleiters (15) in den Hohlraum (221) des Isolierelements (22) durch schräges Einsetzen des Endes des Leiters (15) in der im zweiten Abschnitt (24) des Leiterelements (21) ausgearbeiteten Öffnung (26) zu platzieren und den Leiter (15) gegen den Körper des Kabels herunterzuklappen;
- einen vierten Schritt, der darin besteht, eine leitende Hülse (34) um die Vorrichtung derart zu platzieren, dass eine elektrische Kontinuität der elektrischen Abschirmung beiderseits der Vorrichtung gesichert ist;
- einen fünften Schritt, der darin besteht, einen Schutzhüllenabschnitt (35), der die Zone des Kabels verkleidet, wo der Stromabnehmerleiter (15) platziert ist, zu platzieren, wobei die Hülle aus elastischem Isolationsmaterial einen Durchmesser aufweist, der derart festgelegt ist, dass sie den Halt des Leiters (15) in an den Körper des Kabels angelegter Position sichert.

12. Verfahren nach Anspruch 11, **dadurch gekennzeichnet, dass** der verwendete Schutzhüllenabschnitt (35) aus EPDM ist.

13. Verfahren nach einem der Ansprüche 11 oder 12, **dadurch gekennzeichnet, dass** das Platzieren eines Stromabnehmerleiters (15) auf einem Kabel, das eine elektrische Abschirmung aufweist, im Bereich der Verbindung zwischen zwei Kabelsegmenten (13a, 13b) mittels einer Anschlussverbindung (12) erfolgt, wobei die Abnehmervorrichtung (20) auf dem Kabel derart platziert ist, dass das Isolierelement (22) der Vorrichtung im Anschlag an der Anschlussverbindung (12) platziert ist.

14. Verfahren nach Anspruch 13, **dadurch gekennzeichnet, dass** die Durchführung des dritten und vierten Schritts durch schrittweises Ausbreiten des Metallgeflechts und der Schutzhülle, die die Anschlussverbindung (12) ausstatten, auf dem Kabel erfolgt.

## Claims

1. Current collector device for a cable of the type comprising an electric screen surrounding a central conductor, said electric screen being arranged under the outer protective sheath of said cable, said device comprising a conductive element (21), itself comprising a first tubular section (23) of substantially cylindrical shape forming a conductive sleeve designed to be inserted on the cable in contact with the screen and a second tubular section (24) substantially cylindrical, with a diameter greater than the diameter of the first section, the two sections being linked to each other by a frustoconical tubular intermediate section (25); as well as an insulating element (22) of cylindrical shape, made of insulating and elastic material, designed to be inserted at least partially into the second tubular section (24) of the conductive element (22), **characterized in that** the wall of the second tubular section (24) has at least one opening (26) extending on the wall of the intermediate section (25), said opening (26) being designed to allow the insertion of a conductor (15) of diameter determined by the wall of the conductive element (21) so as to ensure, after insertion, its retention in place in the opening (26) and its permanent electrical connection with the first element (21), **in that** the opening (26) is designed to allow the insertion of the conductor (15) obliquely with respect to the body of the first section (23) of the conductive element (21) and to present, on its part extending on the wall of the intermediate section, a constricted zone (263) designed to allow in said constricted zone (263), the insertion of the conductor (15) when, after insertion into the opening (26), it is folded against the first section (23) of the conductive element (21), and **in that** the edges of the opening (26) are shaped, at least at the level of the constricted zone (263), so as to present a cutting edge (264) which is designed to score the surface of the conductor (15) when the latter is folded against the first section (23) of the conductive element (21).

2. Device according to claim 1, **characterized in that** the insulating element (22) has on its periphery at least one cavity (221) dimensioned so that when the insulating element (22) is inserted into the second tubular section (24) of the conductive element (21), the cavity (221) is disposed opposite the opening (26); allowing the end of the conductor (15) to be housed in the cavity (221) by passing through the opening (26).

3. Device according to claim 1 or 2, **characterized in that** the second tubular section (24) of the conductive element (21) has on its outer edge a folding of its wall to form a circumferential rim (241) directed towards the interior and disposed in the plane perpendicular to the axis of said section, said rim (241) limiting the opening of the second tubular section (24) so that when the insulating element (22) is inserted therein, it is blocked in position by said rim (241).

4. Device according to claim 3, **characterized in that** the insulating element (22) comprises on its outer wall a circular groove so designed that when the second element (22) is inserted into the second section (24) of the conductive element (21), the outer rim (241) comes to be housed in the groove.

5. Device according to any one of claims 3 or 4, **characterized in that** the outer rim (241) of the second tubular section (24) of the conductive element (21) has a cutout at the location of an opening (26) allowing the end of a conductor (15) inserted in said opening (26) to penetrate into the part of the cavity (221) of the insulating element (22) situated outside said second section (24).

6. Device according to one of claims 1 to 5, **characterized in that** the insulating element (22) is a solid element comprising at its center a cylindrical opening allowing said second element to be disposed around the cable.

7. Device according to any one of the preceding claims, **characterized in that** the opening of the wall of the second section (24) of the conductive element (21) is so designed that the inner edge (261) of said opening (26) extending on the wall of the intermediate section (25) is at a distance from the junction line (28) between the first section (23) and the intermediate section (25).

8. Device according to any one of the preceding claims, **characterized in that** the first section (23) of the conductive element (21) has a smooth outer surface or an outer surface comprising pins (27) in the manner of a cheese grater.

9. Device according to any one of the preceding claims, **characterized in that** the insulating element (22) is made of EPDM elastomer.

10. Device according to any one of the preceding claims **characterized in that** the second section (24) of the conductive element (21) being provided with several openings (26) at a distance from each other and distributed around its periphery, the insulating element (22) has as many cavities (221) as the conductive element (21) has openings (26), said cavities (221) being arranged around the periphery of the insulating element (22) such that, when the latter is inserted into the second section (24) of the conductive element (21), each cavity (221) may be disposed opposite an opening (26).

11. Method for the establishment of a current collector conductor on a cable comprising an electrical screen, **characterized in that**, the establishment being performed by means of a current collector (20) according to any one of claims 1 to 7, it comprises the following steps:
- a first step consisting in scoring the outer protective sheath (33) surrounding the cable,
- a second step consisting in threading the current collector device (20) around the cable and in inserting the first section (23) of the conductive element (21) of the device under the protective sheath (33), so as to establish electrical continuity between the cable screen and said first section (23);
- a third step consisting in disposing the end of the current collector conductor (15) in the cavity (221) of the insulating element (22), by the oblique insertion of the end of said conductor (15) into the opening (26) made in the second section (24) of the conductive element (21), and by folding said conductor (15) against the body of the cable;
- a fourth step consisting in disposing a conductive sleeve (34) around the device so as to ensure electrical continuity of the electrical screen on either side of the device;
- a fifth step consisting in disposing a section of protective sheath (35) to envelop the zone of the cable where the installation of the current collector conductor (15) is carried out, said sheath of elastic insulating material having such a defined diameter that it ensures said conductor (15) is held in position pressed against the body of the cable.

12. Method according to claim 11, **characterized in that** the section of protective sheath (35) is made of EPDM.

13. Method according to one of claims 11 or 12, **characterized in that** the establishment of a current collector conductor (15) on a cable comprising an electric screen being carried out at the junction between two segments (13a , 13b) of cables by means of a junction fitting (12), the collecting device (20) is disposed on the cable so that the insulating element (22) of the device abuts against the junction fitting (12).

14. Method according to claim 13, **characterized in that** the implementation of the third and fourth steps is performed by successively deploying on the cable the metal braid and the protective sheath which equip the junction fitting (12).
